# EUROPÄISCHE PATENTSCHRIFT

(11) **EP 2 858 836 B1**
(45) Veröffentlichungstag und Bekanntmachung des Hinweises auf die Patenterteilung: **16.09.2015**
(21) Anmeldenummer: 14747398.7
(22) Anmeldetag: 05.08.2014
(51) Int. Cl.: B60C 23/04

(54) **SENSOREINRICHTUNG ZUR ERFASSUNG UND DRAHTLOSEN ÜBERMITTLUNG DES REIFENDRUCKS**
SENSOR DEVICE FOR SENSING AND WIRELESS TRANSMISSION OF TYRE PRESSURE
CAPTEUR DE DÉTECTION ET DE TRANSMISSION SANS FIL DE LA PRESSION D'UN PNEUMATIQUE

(30) Priorität: 13.08.2013 DE 102013108749
(43) Veröffentlichungstag der Anmeldung: 15.04.2015
(73) Patentinhaber: Huf Hülsbeck & Fürst GmbH & Co. Kg, 42551 Velbert (DE)
(72) Erfinder: WAGNER, Markus, 71638 Ludwigsburg (DE)
(74) Vertreter: Zenz Patentanwälte Partnerschaft mbB
(86) Internationale Anmeldenummer: PCT/EP2014/066834
(87) Internationale Veröffentlichungsnummer: WO 2015/022237

(56) Entgegenhaltungen:
- EP-A1- 2 495 113
- DE-A1-102004 040 790
- US-A1- 2012 050 029
- US-A1- 2012 222 477

## Beschreibung

Die Erfindung betrifft das Gebiet der Reifendruckkontrolleinrichtungen (TPMS). Es sind im Stand der Technik Reifendrucküberwachungssysteme bekannt, die eine Druckinformation im Bereich des Reifenventils messen und diese drahtlos an eine Auswerteeinrichtung innerhalb des Fahrzeugs übertragen. Beispielsweise beschreibt die DE 101 50 760 A1 ein entsprechendes Reifendruckkontrollsystem, welches außerdem einen Raddrehzahlsensor aufweist. Derartige Systeme sind sogenannte direktmessende Systeme, sie bestimmen den Reifendruck mittels eines im Reifenventil integrierten Messmoduls. Eine drahtlose Kommunikationseinrichtung ist in dieser Anordnung ebenfalls integriert und sendet die Reifendruckinformationen, ggf. mit weiteren Informationen wie der Temperatur, an einen im Fahrzeug installierten Empfänger. Ein derartiges Reifendruckmessmodul kann in Ventilnähe in der Felge montiert oder mit dem Ventil baulich zusammengefasst sein. Die weitere Verarbeitung der Druckdaten erfolgt fahrzeugseitig und beispielsweise erfolgt eine Anzeige des Reifendrucks oder eine Warnmeldung, wenn ein Luftdruckgrenzwert unterschritten wird.

Entsprechende Systeme gibt es für verschiedene Fahrzeughersteller und auch verschiedene Hersteller von entsprechenden TPMS-Systemen. Die Reifensätze sind wiederum von anderen Herstellern im Markt angeboten und müssen mit der Felge zu einem sicheren Funktionsbestandteil der entsprechenden Fahrzeuge werden. Oftmals unterscheiden sich die Anforderungen hinsichtlich des Kommunikationsprotokolls zwischen dem Reifendruckmessmodul, also der radseitigen drahtlosen Kommunikationseinheit und der fahrzeugseitigen Kommunikationseinheit, welche die Messwerte entgegennimmt. Je nach Hersteller oder Fahrzeugtyp können unterschiedliche Kommunikationsanforderungen hinsichtlich der Reihenfolge der Informationen oder des Datenformats bestehen. Die EP2423008A1 beschreibt ein programmierbares System, welches die Anpassung der Reifendruckmessmodule an unterschiedliche Anforderungen erlaubt. Auf diese Anmeldung wird zum vollständigen Verständnis dieser Anmeldung ausdrücklich und umfassend Bezug genommen.

Die US 2012/222477 A1 beschreibt ein Reifendruckmessmodul gemäß dem Oberbegriff dieser Anmeldung zur Druckerfassung an Fahrzeugreifen. Das Reifendruckmessmodul hat eine Aufnahme in der ein Drucksensor, eine mit dem Drucksensor gekoppelte Steuerschaltung und eine Sendeeinrichtung, die zur drahtlosen Übermittlung von Daten aus der Steuerschaltung an eine fahrzeugseitige Gegenstelle ausgebildet ist, aufgenommen sind. Die Aufnahme ist zur Anbringung an dem Fahrzeugreifen ausgebildet. Die Steuerschaltung weist programmierbare Speichermittel auf und eine Programmierschnittstelle ist zum Beschreiben der Speichermittel mit frei liegenden Kontaktbereichen ausgebildet, wobei die Kontaktbereiche zur galvanischen Kontaktierung durch Kontakte einer zugehörigen Programmiereinrichtung vorgesehen sind.

Die US 2012/050029 A1 und die EP 2 495 113 A1 offenbaren ebenfalls programmierbare Druckmesseinrichtungen mit beabstandeten Kontakten für eine Programmierung. Eine Programmiereinrichtung kontaktiert die Kontakte mit einem Stecker mit mehreren PINs.

Die DE 10 2004 040790 offenbart ein mehrteiliges Steuergerät für Druckmesseinrichtungen, mit einem Fußteil, das dauerhaft und stationär im Fahrzeug anbringbar ist und einem mobilem, mit einer Eingabeeinrichtung zur direkten Eingabe der verschiedenen Radpositionen versehenen Teil, das während des üblichen Arbeitsmodus mit dem Fußteil verbunden ist und zur Durchführung des Zuordnungsmodus vom Fußteil lösbar und in die Nähe der einzelnen Räder des stehenden Fahrzeugs bringbar ist, um dort zum Zwecke der Zuordnung Funktelegramme zu empfangen.

Aufgabe der Erfindung es ist, eine universelle Einrichtung zur Druckerfassung am Fahrzeugreifen bereitzustellen, welche in einfacher und sicherer Weise für verschiedene Anwendungsfälle bei unterschiedlichen TPMS-Systemen programmierbar ist.

Gelöst wird diese Aufgabe durch eine Einrichtung mit den Merkmalen des Patentanspruchs 1.

Gemäß der Erfindung weist das Reifendruckmessmodul für einen Fahrzeugreifen eine Aufnahme auf, die einen Drucksensor, eine mit dem Drucksensor gekoppelte Steuerschaltung und eine Sendeeinrichtung enthält. Das Reifendruckmessmodul ist zur Anordnung an einen Fahrzeugreifen ausgebildet. Ein Ventil ist mit dem Reifendruckmessmodul koppelbar, wobei das Ventil außerdem auch als Antenne für die Sendeeinrichtung der Steuerschaltung in der Aufnahme dienen kann. Als Aufnahme ist jede Art von mechanisch stabilem Gehäuse, insbesondere Gehäusewanne zu verstehen, die eine definierte Außenform aufweist und zur Aufnahme der vorgenannten Komponenten geeignet ist.

Gemäß der Erfindung ist die Steuerschaltung außerdem mit programmierbaren Speichermitteln ausgestattet, welche Informationen bezüglich eines Kommunikationsprotokolls der auszusendenden erfassten Daten aufnehmen kann. Die Steuerschaltung greift entsprechend auf die programmierbaren Speichermittel zurück, um in angepasster Weise und wie die abgespeicherten Daten es vorgeben, die Daten an die fahrzeugseitige Empfangseinrichtung zur Weiterverarbeitung auszusenden.

Die vorgenannten Komponenten können in der Aufnahme in beliebiger Weise verkapselt sein, insbesondere mit einer Vergussmasse bedeckt sein, um sie vor Umwelteinflüssen, elektrischen Fehlschaltungen und Feuchtigkeit zu schützen.

Gemäß der Erfindung sind an dem Reifendruckmessmodul weiterhin Kontaktbereiche ausgebildet, die zur Kontaktierung für eine Programmierung der Speichermittel vorgesehen sind. Die Kontaktbereiche bilden also eine Schnittstelle, die mit einem entsprechenden Gegenstück zur Datenübertragung kontaktiert wird. Werden die Kontaktbereiche mit zugehörigen Kontakten einer Programmiereinrichtung galvanisch verbunden, also in elektrisch leitenden unmittelbaren Kontakt gebracht, können die Programmiermittel die programmierbaren Speichermittel beschreiben, um das Kommunikationsprotokoll und Kommunikationsformat in den Speichermitteln zu hinterlegen. Ein entsprechendes Konzept der Kontaktierung mit einer Steckerverbindung ist der EP2423008 zu entnehmen.

Erfindungsgemäß sind die Kontaktbereiche mit einer elastischen Isolierschicht bedeckt, welche für die Programmierung durch die Kontaktstifte der Programmiereinrichtung durchstoßbar ausgebildet ist. Die Kontaktbereiche sind also elektrisch isolierend abgedeckt, beispielsweise durch eine entsprechende weiche Vergußmasse oder sonstige Elastomerschicht. Die Isolierschicht ist jedoch derart ausgebildet, dass ein mechanisches Durchstoßen der Isolierschicht durch die Programmiereinrichtung, insbesondere durch die Kontaktstifte möglich ist. Außerdem ist die Isolierschicht elastisch, um eine weitgehenden oder vollständigen Verschluss der Isolierschicht nach dem Programmiervorgang und der Entfernung der Kontaktstifte zu ermöglichen.

Unter weicher Vergussmasse ist eine Vergussmasse mit einer geringen Shore A Härte gemäß ISO 868 nach Aushärten zu verstehen. Weich bedeutet also eine Shore A Härte von weniger als 70-80. Allerdings sind insbesondere elastische Stoffe mit einer Shore A Härte von weniger als 50, auch von weniger als 30 gut geeignet.

Erfindungsgemäß gelangen also die Reifendruckmessmodule als universell einsetzbare Reifendruckmessmodule in den Gebrauch. Je nach Fahrzeugtyp oder Steuerungssystem am Fahrzeug wird vor oder bei der Reifenmontage eine Programmierung der Reifendruckmessmodule durch entsprechend vorbereitete Programmiereinrichtungen vorgenommen. Dazu wird eine Schnittstelle der Programmiereinrichtung, welche Kontaktstifte aufweist, mit dem Reifendruckmessmodul gekoppelt, wobei die Kontaktstifte die Isolierschicht oberhalb der Kontaktbereiche der Schnittstelle zum Speichermittel der Reifendruckmessmodule durchstoßen. Es erfolgt ein Schreibvorgang in den Speichermitteln, der dank der galvanischen Kopplung äußerst rasch abläuft. Auch größere Datenmengen können auf die programmierbaren Speichermittel (z.B. Flash-Speicher) dank der galvanischen Kontaktierung schnell übertragen werden. Ein solcher Programmiervorgang dauert regelmäßig nur einige Sekunden. Nachdem die Programmierung erfolgt ist, wird die Programmiereinrichtung vom Reifendruckmessmodul abgenommen, wobei die Kontaktstifte wieder außer Kontakt mit den Kontaktbereichen des Reifendruckmessmoduls gelangen. Die isolierende Schicht auf den Kontaktbereichen weist als elastische Schicht Rückstellkräfte auf und sorgt so für einen weitgehenden Verschluss der durchstoßenden Bereiche der elastischen Isolierschicht. Der Vorteil der Erfindung besteht hierbei insbesondere darin, dass ein vollständig gekapseltes Modul der Programmierung zugeführt wird, wobei keine Öffnung des Gehäuses oder ein Austausch von Speichermitteln vorzunehmen ist. Die Programmierung erfolgt rasch und unkompliziert, dennoch ist das Erfassungsmodul sowohl vor als auch nach dem Programmiervorgang umfassend gegenüber Schutz und Feuchtigkeit geschützt. Die Isolierschicht dient als zeitweilig durchstoßbare Schutzhaut, deren Beschädigung jedoch durch die Elastizität der Isolierschicht nahezu vernachlässigbar ist. Die Kontaktstifte können insbesondere so geformt sein, dass ein sauberes durchstoßen und nachfolgendes Verschließen der Schutzhaut möglich ist, z.B. durch angespitzte Enden.

In der Programmiereinrichtung sind Daten vorhanden, für welches fahrzeugseitige System welche Daten in den Speichermitteln des Reifendruckmessmoduls zu hinterlegen sind. Die Auswahl erfolgt benutzerseitig oder z.B. durch scannen einer Kennung am Fahrzeug. Das Reifendruckmessmodul wird bei der späteren Benutzung auf die Daten der Speichermittel zurückgreifen, um entsprechende Kommunikationsvorgänge mit dem fahrzeugseitigen Steuermodul abzuwickeln.

Wesentlich ist, dass eine Programmierung der Speichermittel des Reifendruckmessmoduls über eine galvanische Kontaktierung, also eine unmittelbar elektrisch leitende Kontaktierung möglich ist, obwohl die Kapselung der Einrichtung nur kurz für die Programmierung durchbrochen wird. Dies erweitert die Möglichkeiten der Programmierung hinsichtlich der übertragenen Datenmengen und erhöht die Akzeptanz auf Benutzerseite, da ein Programmiervorgang sehr schnell und komfortabel abzuwickeln ist. Möglich wird dies, da die Schnittstelle seitens der Reifendruckmesseinrichtung mit einer elastischen Isolierschicht versehen ist. Die Durchstoßbarkeit dieser Schicht und die elastische Ausbildung führen zu einer nur geringfügigen Beschädigung oberhalb der Kontaktbereiche. Diese Bereiche können nach Programmierung wahlweise auch noch mit einer Schutzabdeckung, beispielsweise einem einfachen Aufkleber versehen werden. Dies hat zusätzlich den Vorteil, dass programmierte Einrichtungen auch unmittelbar als solche erkennbar sind.

Außerdem ist es möglich, dass das Modul nach erfolgreicher Programmierung die Kopplung der Kontaktbereiche zur Programmierung mit den Speichermitteln unterbricht. Dann ist das Modul einmal beschreibbar und danach verriegelbar. Selbst wenn dann der Bereich der mechanischen Beschädigung geringfügig kontaminiert wird, z.B. durch Wassereintritt, hat dies keinen Einfluss auf die Funktion, da die Kontakte tot geschaltet sind. Durch die Isolierschicht wird jedenfalls eine Beeinträchtigung der weiteren Komponenten sicher verhindert.

In einer bevorzugten Ausführungsform der Erfindung ist die elastische Isolierschicht aus einer Vergussmasse gebildet, insbesondere einer weichen Vergussmasse. Die Vergussmasse kann dabei dieselbe sein, die auch die übrigen Komponenten des Reifendrucksensors umschließt, insbesondere die Steuereinschaltung und die Sendeeinrichtung. Elastische Vergussmasse sind in vielfältiger Form am Markt verfügbar. Da es in diesem Anwendungsbereich der Erfindung wesentlich auf einen Feuchteschutz und einen Schmutz vor Staub ankommt, weniger jedoch auf einen Schutz vor starker mechanischer Beanspruchung, dienen insbesondere die weichen Vergussmasse dem erfindungsgemäßen Zweck. Sie sind leicht zu durchstoßen und setzen beim Programmiervorgang den die Vergussmasse durchdringenden Kontaktstiften wenig Widerstand entgegen.

Es ist besonders vorteilhaft, wenn die Isolierschicht oberhalb der Kontaktbereiche als selbstheilende Isolierschicht ausgebildet ist. Derartige Isolierschichten und Vergussmaterialien sind in der Technik ebenfalls bekannt und eigenen sich für die erfindungsgemäße Verwendung, da nach dem Durchstoßen und Programmieren eine weitgehende Selbstheilung und stabiler Verschluss der Verkapselung automatisch erfolgt.

In einer bevorzugten Ausführungsform der Erfindung sind die Kontaktbereiche als Kontaktflächen ausgebildet, welche mit den Kontaktstiften der Programmiereinrichtungsschnittstelle in Kontakt gebracht werden können. Während auch andere Gestaltungen der Kontaktbereiche, z.B. als Hülsen welche die Kontaktstifte umschließen, ausgebildet werden können, ist die Ausbildung als Kontaktflächen besonders raumsparend.

Gemäß einem weiteren Aspekt der Erfindung wird ein System offenbart, welches aus dem Reifendruckmessmodul gemäß vorstehender Beschreibung besteht und einer zugehörigen Programmiereinrichtung. Dabei weist die Programmiereinrichtung mehrere, voneinander mit Abstand ausgerichtete und gegeneinander fixierte Kontaktstifte auf. Gegeneinander fixiert bedeutet in diesem Zusammenhang, dass die Kontaktstifte aus einer gemeinsamen Ebene vorstehen, sie jedoch an in der Ebene fixierten Positionen angeordnet sind, also eine Ausrichtung in radialer Richtung der Stifte zueinander einhalten. Diese radiale Ausrichtung der Kontaktstifte zueinander korrespondiert mit der Anordnung der zugehörigen Kontaktbereiche innerhalb der Aufnahme des Reifendruckmessmoduls. Wird also die Programmiereinrichtung in korrekter Ausrichtung über das Reifendruckmessmodul gebracht, liegen die Kontaktstifte der Programmiereinrichtung in richtiger Zuordnung über den Kontaktbereichen der Schnittstelle zur Programmierung des Speichers im Reifendruckmessmodul. Die Kontaktstifte sind in axialer Richtung so angeordnet, dass sie entsprechend der Anordnung der Kontaktbereiche im Reifendruckmessmodul in derselben Ebene enden oder zueinander versetzt sind, je nachdem, ob die Kontaktbereiche im Reifendruckmessmodul in derselben Ebene liegen oder zueinander versetzt angeordnet sind.

Zur einfacheren Programmierung sind vorzugsweise die Aufnahme des Reifendruckmessmoduls und die Programmiereinrichtung als passgenaue Gegenstücke zueinander geformt oder konturiert, so dass die Programmiereinrichtung in einfacher Weise auf das Reifendruckmessmoduls auflegbar oder in dieses einlegbar ist, um eine sichere Kontaktierung der Kontaktstifte mit den zugehörigen Kontaktbereichen in dem Reifendruckmessmodul zu ermöglichen. Beispielsweise kann die Programmiereinrichtung dazu eine geeignete Aufnahme oder Anschläge aufweisen, in welche das Reifendruckmessmodul eingelegt oder an welche das Reifendruckmessmodul angelegt wird. Die Ausrichtung der Kontaktbereiche relativ zu der Aufnahme seitens des Reifendruckmessmoduls und die Ausrichtung der Kontaktstifte zu den Außenkonturen der Programmiereinrichtung gewährleistet, dass eine korrekte Zuordnung der Kontaktstifte zu den jeweiligen Kontaktbereichen erfolgt, wenn die Programmiereinrichtung mit den Kontaktstiften und gegenüber dem Reifendruckmessmodul zum Durchstoßen der Isolierschicht bewegt wird.

In einer weiteren bevorzugten Ausgestaltung sind die Kontaktstifte federnd gelagert. So wir auch bei

Fertigungstoleranzen oder leichten Fehlausrichtungen bei der Kontaktierung sichergestellt, dass sämtliche Kontakte kontaktiert werden. Die Federung ist derart abzustimmen, dass die Federkonstante in jedem Fall eine Durchstoßung der Vergussmasse erlaubt. Andererseits kann über die Wahl der Federkraft die maximale Kraft, die auf die Kontaktbereiche einwirkt, begrenzt werden.

Die Programmiereinrichtung kann dabei z.B. auch Aufnahmen aufweisen, in welche mehrere Reifendruckmessmodule zeitgleich eingelegt werden können, z.B. vier Aufnahmen für die zeitgleiche Programmierung von vier Reifendruckmessmodulen.

Die Erfindung wird nun anhand der beiliegenden Zeichnungen näher erläutert.

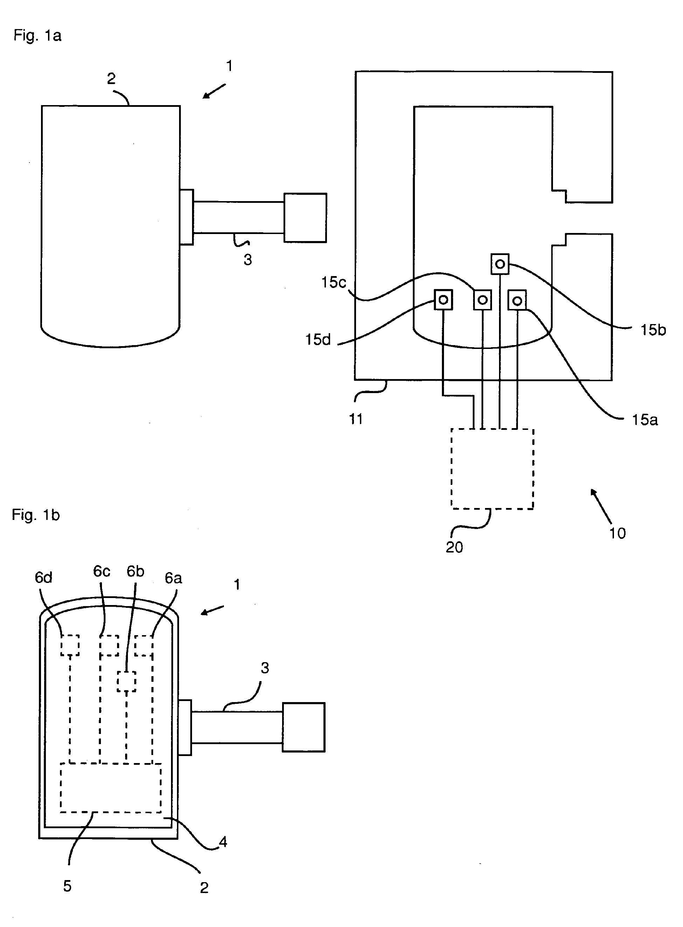

Figur 1a zeigt in schematischer Darstellung ein Reifendruckmessmodul und eine zugehörige Programmiereinrichtung;
Figur 1b zeigt das Reifendruckmessmodul aus Figur 1a in einer Ansicht von unten.

In Figur 1a ist ein Ausführungsbeispiel der erfindungsgemäßen Kombination aus Reifendruckmessmodule und Programmiereinrichtung gezeigt. Ein Reifendruckmessmodul 1 weist eine Aufnahme 2 auf, die in der dargestellten Ansicht von oben als geschlossene Schale ausgebildet ist, von der hier nur der Boden zu sehen ist. Das Reifendruckmessmodul 1 weist außerdem ein Ventil 3 auf, welches zur Befüllung eines Fahrzeugreifens ausgebildet ist und außerdem als Antenne für die Funkkommunikation des Reifendruckmessmoduls 1 wirkt. Das Ventil 3 ragt nach der Montage üblicherweise durch eine Öffnung in der Felge eines Rades. Der Reifendruck wird im Reifendruckmessmodul 2, ebenso wie die Temperatur durch Druck- und Temperatursensoren erfasst. Das Ventil 3 kann mit der Aufnahme 2 gekoppelt und von dieser entkoppelt werden, so dass unterschiedliche Ventile an der Aufnahme mit den innenliegenden Komponenten befestigt werden können. Dieser grundsätzliche Aufbau ist aus verfügbaren Reifendruckkontrollsystemen (TPMS) bekannt.

Die in der Aufnahme angeordneten Komponenten des Reifendruckmessmoduls, insbesondere Drucksensoren, Steuerschaltung und Programmierschnittstelle werden unten unter Bezug auf die nächste Figur unten erläutert.

Außerdem zeigt Figur 1a eine Programmiereinrichtung 10. Die Programmiereinrichtung 10 weist eine Positionieraufnahme 11 auf, in welche das Reifendruckmessmodul 1 einlegbar ist. Wird das Reifendruckmessmodul 1 in die Aussparung der Positionieraufnahme 11 eingelegt, so befindet sich das Reifendruckmessmodul in einer korrekten Ausrichtung für eine Programmierung. An der Bodenseite der Aufnahme 11 sind Kontaktstifte 15a, 15b, 15c und 15d ausgebildet. Die Kontaktstifte ragen von einer Basis nach oben, in Richtung der Aufnahme. Die Kontaktstifte sind mit einer Programmierelektronik 20 durch elektrische Leitungen gekoppelt. Bei der Programmierelektronik 20 kann es sich um eine spezielle Elektronik oder auch um eine herkömmliche Computereinrichtung (z.B. Laptop oder Tablet) handeln. Zur Verbindung kann die Programmiereinrichtung 20 auch über gängige Schnittstellen, beispielsweise USB-Schnittstellen mit den Kontaktstiften 15a - 15d gekoppelt sein, wobei dann beispielsweise eine Steckerverbindung als Kupplung zwischengeschaltet ist.

Unter Bezug auf Figur 1b ist die Unterseite des Reifendruckmessmoduls 1 gezeigt. Die Unterseite der Aufnahme ist schalenförmig und mit einer elastischen Dichtmasse 4 gefüllt. Die elastische Dichtmasse 4 kapselt die innenliegenden Komponenten in der Aufnahme 2 gegen Feuchtigkeit und Umwelteinflüsse ab. Die elastische Dichtmasse bedeckt dabei sowohl eine Steuereinrichtung 5 als auch Kontaktflächen 6a, 6b, 6c und 6d. Diese Kontaktflächen sind über elektrische Leitungen mit der, ebenfalls verkapselten, Steuereinrichtung 5 gekoppelt. Die Steuereinrichtung 5 ist mit Speichermitteln ausgestattet, die über die Kontaktflächen 6a - 6d programmierbar sind.

Sowohl die Steuereinrichtung 5 als auch die Schaltflächen 6a - 6d und die zugehörigen Leitungen sind in gebrochenen Linien dargestellt, da sie durch die elastische Vergussmasse 4 bedeckt sind.

Die elastische Vergussmasse ist in diesem Beispiel als selbstheilende Vergussmasse ausgebildet. Wird das Reifendruckmessmodul 1 in der Orientierung aus Figur 1a in die Programmiereinrichtung eingelegt und ein Druck auf die Aufnahme 2 ausgeübt, so durchstoßen die Kontaktstifte 15a - 15d die elastische Isolierschicht 4 und treten in Kontakt mit den Kontaktflächen 6a - 6d. Die Positionierungsaufnahme 11 sorgt dabei für eine Ausrichtung der Kontaktstifte 15a - 15d zu den Kontaktflächen 6a - 6d. Nachdem ein galvanischer Kontakt zwischen den Stiften und den Flächen hergestellt ist wird die Programmierung der Speichermittel in der Steuereinrichtung 5 durch die Einrichtung 20 gestartet. Eine solche Programmierung benötigt üblicherweise nur die Zeitspanne einiger Sekunden. Dies ist insbesondere der Fall, wenn nur Informationen zum Übertragungsprotokoll übertragen werden, das eigentliche Kontrollprogramm jedoch bereits in der Einrichtung 5 gespeichert ist.

Nach Abschluss der Programmierung kann das Reifendruckmessmodul 1 wieder aus der Positionierungsaufnahme 11 entnommen werden, wobei die Kontaktstifte von den Kontaktflächen abgehoben werden. Die Durchstoßungskanäle in dem elastischen Isoliermaterial 4 schließen sich aufgrund der elastischen Gestaltung der Isolierschicht weitestgehend selbst. Es kann jedoch zusätzlich noch eine Abdeckung, beispielsweise durch einen Aufkleber erfolgen. Da es sich in dieser Ausführungsform jedoch um eine selbstheilende Isolierschicht handelt, wird nach Ablauf einer Zeitspanne von einigen Stunden eine flüssigkeitsdichte Barriere durch die Isolierschicht 4 wiederhergestellt sein.

Der Vorteil dieser Erfindung liegt darin, dass einheitliche Reifendruckmessmodule bereitgestellt werden können und keine getrennte Bevorratung, je nach Programmierung der Speichermittel zu erfolgen braucht. Beispielsweise kann eine Werkstatt eine Vielzahl der Reifendruckmessmodule bevorraten und diese nach Bedarf programmieren. Der eigentliche Programmiervorgang stellt sicher, dass die Programmiereinrichtung in einer äußerst sauberen und auch an die rauen Werkstattbedingungen angepassten Weise erfolgt. Selbst in einer Umgebung mit großer Schmutzbelastung oder Feuchtbelastung ist die Programmierung problemlos möglich, da selbst während des gesamten Programmiervorgangs eine verkapselte Verbindung zwischen der Reifendruckmesseinrichtung und ihren Kontaktbereichen und der Programmiereinrichtung besteht. Die elastische Isolierschicht umschließt die Kontaktstifte beim Durchstoßen der Isolierschicht und verhindert ein Eindringen von unerwünschten Fremdstoffen oder Fluiden. Nach dem Abschluss der Programmierung und beim Herausziehen der Kontaktstifte schließt sich die elastische Isolierschicht weitestgehend, so dass während der gesamten Zeitdauer keine technische Beeinträchtigung der Einrichtung erfolgt.

Wesentlich ist, dass erfindungsgemäß eine elastische Isolierschicht für eine Programmierschnittstelle verwendet wird, die eine problemlose, vertauschungssichere und einfache sowie schnelle Programmierung einer Reifendruckmesseinrichtung erlaubt.

## Patentansprüche

1. Reifendruckmessmodul (1) für einen Fahrzeugreifen, wobei das Reifendruckmessmodul (1) eine Aufnahme (2) aufweist, wobei in der Aufnahme angeordnet sind:
ein Drucksensor, eine mit dem Drucksensor gekoppelte Steuerschaltung (5) und eine Sendeeinrichtung, die zur drahtlosen Übermittlung von Daten aus der Steuerschaltung an eine fahrzeugseitige Gegenstelle ausgebildet ist,
wobei die Aufnahme (2) zur Anbringung an dem Fahrzeugreifen ausgebildet ist,
wobei die Steuerschaltung (5) programmierbare Speichermittel aufweist,
dass eine Programmierschnittstelle zum Beschreiben der Speichermittel mit Kontaktbereichen ausgebildet ist, wobei die Kontaktbereiche (6a, 6b, 6c, 6d) zur galvanischen Kontaktierung durch Kontaktstifte (15a, 15b, 15c, 15d) einer zugehörigen Programmiereinrichtung (10) vorgesehen sind,
**dadurch gekennzeichnet,**
**dass** die Kontaktbereiche mit einer elastischen Isolierschicht (4) bedeckt sind, welche für die Programmierung durch die Kontaktstifte (15a, 15b, 15c, 15d) durchstoßbar ausgebildet ist.

2. Reifendruckmessmodul nach Anspruch 1, wobei die elastische Isolierschicht (4) aus einer Vergussmasse, insbesondere einer weichen Vergussmasse gebildet ist, vorzugsweise einer Vergussmasse mit einer Shore A Härte von 80 oder geringer, besonders bevorzugt einer Shore A Härte von 50 oder geringer, insbesondere einer Shore A Härte von 30 oder geringer.

3. Reifendruckmessmodul nach Anspruch 1 oder 2, wobei die Isolierschicht (4) als selbstheilende Isolierschicht ausgebildet ist.

4. Reifendruckmessmodul nach einem der vorangehenden Ansprüche, wobei die Kontaktbereiche als Kontaktflächen ausgebildet sind.

5. System mit einer Reifendruckmessmodul nach einem der Ansprüche 1 bis 4 und einer Programmiereinrichtung, wobei die Programmiereinrichtung mehrere, zueinander beabstandet ausgerichtete und gegeneinander fixierte Kontaktstifte aufweist, wobei die Kontaktstifte in ihrer Lage zueinander entsprechend der Kontaktbereiche der Reifendruckmessmodul angeordnet sind, so dass jeder der Kontaktstifte einen zugeordneten Kontakt der Reifendruckmessmodul kontaktiert, wenn die Reifendruckmessmodul und die Programmiereinrichtung derart gegeneinander bewegt werden, dass die Kontaktstifte die Isolierschicht durchstoßen.

6. System nach Anspruch 5, wobei die Programmiereinrichtung und die Aufnahme des Reifendruckmessmoduls derart als passgenaue Gegenstücke geformt oder konturiert sind, dass ein Durchstoßen der Isolierschicht nur bei Ausrichtung der Kontaktstifte über den Kontaktbereichen möglich ist.

7. System nach Anspruch 5 oder 6, wobei die Kontaktstifte in axialer Richtung federnd gelagert sind, so dass eine gleichmäßige und gleichzeitige Kontaktierung der Kontaktbereiche sichergestellt ist.

## Claims

1. A tyre pressure measuring module for a vehicle tyre, wherein the tyre pressure measuring module has a receptacle, wherein in the receptacle there are arranged:
a pressure sensor, a control circuit coupled to the pressure sensor, and a transmission device which is constructed for the wireless transmission of data from the control circuit to a counterpart station in the vehicle,
wherein the receptacle is designed to be mounted on the vehicle tyre,
**characterized in**
**that** the control circuit has programmable memory means,
**that** a programming interface for writing to the memory means is produced with contact areas, wherein the contact areas are provided for contact pins of an associated programming device to make direct electrical contact,
wherein the contact areas are covered with an elastic insulating layer that is designed to be able to be perforated by the contact pins for programming.

2. The tyre pressure measuring module according to claim 1, wherein the elastic insulating layer is formed from a casting compound, in particular a soft casting compound, preferably a casting compound with a Shore A hardness of 80 or less, particularly preferably a Shore A hardness of 50 or less, especially a Shore A hardness of 30 or less.

3. The tyre pressure measuring module according to claim 1 or 2, wherein the insulating layer is constructed as a self-restoring insulating layer.

4. The tyre pressure measuring module according to one of the preceding claims, wherein the contact areas are constructed as contact surfaces.

5. A system with a tyre pressure measuring module according to one of claims 1 to 4, and with a programming device, wherein the programming device has a plurality of contact pins, aligned spaced apart from one another and fixed with respect to one another, wherein the contact pins are arranged in their position to one another according to the contact areas of the tyre pressure measuring module, so that each of the contact pins contacts an associated contact of the tyre pressure measuring module, when the tyre pressure measuring module and the programming device are moved with respect to one another such that the contact pins perforate the insulating layer.

6. The system according to claim 5, wherein the programming device and the receptacle of the tyre pressure measuring module are shaped or contoured as accurately-fitting counterparts such that a perforating of the insulating layer is only possible on alignment of the contact pins over the contact regions.

7. The system according to claim 5 or 6, wherein the contact pins are mounted elastically in axial direction, so that a uniform and simultaneous contacting of the contact areas is ensured.

## Revendications

1. Module de mesure de la pression de pneumatique pour un pneumatique de véhicule, pour lequel le module de mesure de la pression de pneumatique comporte un logement, pour lequel sont disposés dans ledit logement:
un capteur de pression, un circuit de commande et un dispositif émetteur, qui est constitué pour la transmission sans fil de données du circuit de commande à un terminal côté véhicule,
pour lequel le logement est constitué pour être appliqué au pneumatique de véhicule,
**caractérisé**
**en ce que** le circuit de commande comporte des moyens de mémorisation programmables,
**en ce qu'**une interface de programmation est constituée pour décrire les moyens de mémorisation avec des zones de contact, pour lequel les zones de contact sont prévues pour mise en contact galvanique par des broches de contact d'un dispositif de programmation correspondant,
pour lequel les zones de contact sont couvertes avec une couche isolante élastique, laquelle est constituée pouvant être percée par les broches de contact pour la programmation.

2. Module de mesure de la pression de pneumatique selon la revendication 1, pour lequel la couche isolante élastique est formée d'une masse de remplissage, en particulier d'une masse de remplissage molle, de préférence, d'une masse de remplissage avec une dureté Shore A de 80 ou moins, de façon particulièrement préférée d'une dureté Shore A de 50 ou moins, en particulier d'une dureté Shore A de 30 ou moins.

3. Module de mesure de la pression de pneumatique selon la revendication 1 ou 2, pour lequel la couche isolante est constituée comme couche isolante autogénératrice.

4. Module de mesure de la pression de pneumatique selon l'une quelconque des revendications précédentes, pour lequel les zones de contact sont constituées comme des surfaces de contact.

5. Système avec un module de mesure de la pression de pneumatique selon l'une quelconque des revendications 1 à 4, et avec un dispositif de programmation, pour lequel le dispositif de programmation comporte plusieurs broches de contact orientées espacées les unes des autres et fixées les unes par rapport aux autres, pour lequel les broches de contact sont disposées dans leur position les unes par rapport aux autres selon les zones de contact du module de mesure de la pression de pneumatique de sorte que chacune des broches de contact entre en contact avec un cobtact attribué du module de mesure de la pression de pneumatique lorsque le module de mesure de la pression de pneumatique et le dispositif de programmation sont déplacés l'un contre l'autre de telle sorte que les broches de contact percent la couche isolante.

6. Système selon la revendication 5 pour lequel le dispositif de programmation et le logement du module de mesure de la pression de pneumatique sont formés ou contourés comme des pièces correspondantes s'ajustant de façon précise de telle sorte qu'un perçage de la couche isolante n'est possible qu'en orientant les broches de contact au-dessus des zones de contact.

7. Système selon la revendication 5 ou 6, pour lequel les broches de contact sont logées de façon formant ressort dans le sens axial de telle manière qu'une mise en contact uniforme et simultanée des zones de contact est assurée.
